# EUROPÄISCHE PATENTSCHRIFT

(11) **EP 1 875 450 B1**
(45) Veröffentlichungstag und Bekanntmachung des Hinweises auf die Patenterteilung: **15.04.2009**
(21) Anmeldenummer: 06754927.9
(22) Anmeldetag: 28.04.2006
(51) Int. Cl.: G08B 15/00, H04N 5/225

(54) **OPTISCHES MODUL MIT INTEGRIERTER LICHTQUELLE**
OPTICAL MODULE HAVING AN INTEGRATED LIGHT SOURCE
MODULE OPTIQUE A SOURCE LUMINEUSE INTEGREE

(30) Priorität: 29.04.2005 DE 102005020138
(43) Veröffentlichungstag der Anmeldung: 09.01.2008
(73) Patentinhaber: Continental Automotive GmbH, 30165 Hannover (DE)
(72) Erfinder: FRENZEL, Henryk, 93059 Regensburg (DE); SCHMIDT, Harald, 93055 Regensburg (DE)
(86) Internationale Anmeldenummer: PCT/EP2006/061936
(87) Internationale Veröffentlichungsnummer: WO 2006/117346

(56) Entgegenhaltungen:
- WO-A-03/105465
- PATENT ABSTRACTS OF JAPAN Bd. 2003, Nr. 05, 12. Mai 2003 (2003-05-12) & JP 2003 008954 A (FUJITSU GENERAL LTD), 10. Januar 2003 (2003-01-10)

## Beschreibung

Die Erfindung betrifft ein optisches Modul mit einer Linsenanordnung zum Projizieren von elektromagnetischer Strahlung auf einen Bildaufnehmer und mit einer in der Umgebung des Strahleneintrittsbereichs der Linsenanordnung angeordneten Lichtquelle, wobei die Linsenanordnung und die Lichtquelle mit einer für die elektromagnetische Strahlung durchlässigen Abdeckung versehen sind, wobei die Abdeckung mit einer Strahlungsbarriere versehen ist, die für von der Lichtquelle abgegebene Strahlung undurchlässig ist und eine direkte Einkopplung von von der Lichtquelle abgegebenen Strahlung in die Linsenanordnung verhindert und derart in die Abdeckung integriert ist, dass in die Abdeckung eingespeistes Licht nicht in Querrichtung in Richtung des Strahleneintrittsbereichs gelangen kann.

Ein gattungsgemäßes optisches Modul kommt insbesondere in der Kraftfahrtechhik zum Einsatz. Dabei werden die optischen Module in kamerabasierenden Systemen zur Erhöhung des Komforts sowie als Fahrerassistenzsystem eingesetzt. Manche Systeme benötigen eine Lichtquelle, welche überwiegend elektromagnetische Strahlung im Infrarotbereich abgibt, um das zu überwachende Umfeld beobachten und auswerten zu können. Bei der zu beobachtenden Umgebung kann es sich beispielsweise um den Innenraum eines Fahrzeuges, z.B. für die Insassenerkennung oder die Beobachtung von Reaktionen des Fahrers handeln.

Die für ein Kamerasystem der oben beschriebenen Art verwendete Lichtquelle ist häufig in einem von der Kamera unterschiedlichen Gehäuse untergebracht und in räumlicher Nähe zur Kamera angeordnet. Nachteilig an dieser Vorgehensweise ist der mit einem größeren Aufwand in ein Fahrzeug verbundene Einbau. Denn zwischen der Kamera und der Lichtquelle ist eine elektrische Verbindung notwendig, um die Lichtquelle mit der Kamera synchronisiert betreiben zu können.

Es sind auch Anordnungen bekannt, bei denen die Lichtquelle in einem von dem Gehäuse der Kamera unterschiedlichen Gehäuse angeordnet ist.

Aus der WO 03/105465 A1 ist ein optisches Modul bekannt, bei dem in der Umgebung des Strahleneintrittsbereichs der Linsenanordnung Leuchtdioden (LEDs) angeordnet sind, damit das optische Modul auch bei schlechten Lichtverhältnissen arbeiten kann. Die Leuchtdioden sind ringförmig um die Linsenanordnung angeordnet, wobei die Achsen der Leuchtdioden abwechselnd unterschiedliche Winkel mit der Achse des Moduls einschließen. Hierdurch soll eine diffuse Beleuchtung erreicht werden, um eine gleichmäßige Ausleuchtung der optisch zu erfassenden Objekte zu realisieren. Zur Vermeidung unerwünschter optischer Effekte, insbesondere aufgrund von seitlichem Lichteinfalls ist eine Schwärzung oder die Ausnutzung von Totalreflexion vorgesehen.

Aus Patent Abstracts of Japan Bd. 2003, Nr. 05, 12. Mai 2003 & JP 2003 008954 A ist ein gattungsgemäßes optisches Modul bekannt, bei dem der Bildaufnehmer von der Lichtquelle über eine strahlungsundurchlässige Abdeckung voneinander getrennt ist. Durch die Abdeckung wird eine direkte Einkopplung von von der Lichtquelle abgegebenen Strahlung in den Bildaufnehmer verhindert. Die Strahlungsbarriere ist derart in die Abdeckung integriert, dass in die Abdeckung eingespeistes Licht nicht in Querrichtung in Richtung des Strahleneintrittsbereichs gelangen kann. Das dort beschriebene optische Modul wird in einer kuppelförmigen Überwachungskamera eingesetzt.

Es ist Aufgabe der vorliegenden Erfindung, ein optisches Modul anzugeben, das bei einfacher und kostengünstiger Montage eine verbesserte Ausleuchtung eines zu erfassenden Objekts ermöglicht, um eine optimierte Qualität der durch das optische Modul aufgenommenen Bilder bereitstellen zu können.

Diese Aufgabe wird mit einem optischen Modul mit den Merkmalen des Patentanspruches 1 gelöst. Vorteilhafte Ausgestaltungen ergeben sich aus den abhängigen Patentansprüchen.

Bei einem erfindungsgemäßen gattungsgemäßen optischen Modul ist der Bildaufnehmer durch ein Halbleiterelement gebildet. Die Abdeckung weist zumindest auf ihrer zu der Lichtquelle bzw. der Linsenanordnung hin gewandten Seite eine Strukturierung auf, wobei die Strukturierung eine dem Strahlenverlauf der elektromagnetischen Strahlung lenkende Form aufweist.

Die Strukturierung kann dabei den Abstrahlwinkel der Lichtquelle beeinflussen. Auf diese Weise ist es mit besonderem Vorteil möglich, Lichtquelle und Halbleiterelement auf einem oder mehreren gemeinsamen Trägern aufzubringen, so dass diese zunächst parallele optische Achsen aufweisen. Zur Erzielung einer diffusen Beleuchtung für eine gleichmäßige Ausleuchtung der zu erfassenden Objekte lenkt die Strukturierung einen Teil der elektromagnetischen Strahlung in unterschiedliche Richtungen. In entsprechender Weise kann die Strukturierung im Bereich des Strahleneintrittsbereichs die Funktion einer zusätzlichen Linse der Linsenanordnung übernehmen. Das Vorsehen der Strukturierung ermöglicht somit ein Beeinflussen der optischen Eigenschaften in einer auslegungsgemäßen Weise.

Bei einem erfindungsgemäßen gattungsgemäßen optischen Modul sind die Linsenanordnung und die Lichtquelle mit einer für die elektromagnetische Strahlung durchlässigen Abdeckung versehen, wobei die Abdeckung mit einer Strahlungsbarriere versehen ist, die für von der Lichtquelle abgegebene Strahlung undurchlässig ist und eine direkte Einkopplung von von der Lichtquelle abgegebenen Strahlung in die Linsenanordnung verhindert.

Durch die Strahlungsbarriere ist gewährleistet, dass die von der Lichtquelle abgegebene elektromagnetische Strahlung nicht als Streulicht in den Strahleneintrittsbereich der Linsenanordnung gelangen kann, wodurch eine stark verbesserte Bildqualität erzielbar ist. Das Vorsehen einer Abdeckung weist den Vorteil auf, dass das optische Modul gegenüber Verschmutzungen unanfällig und im Falle eventueller Verschmutzungen jedoch reinigungsfreundlich ist. Das Vorsehen einer Abdeckung, welche für die von der Lichtquelle abgegebenen elektromagnetischen Strahlung sowie die von der Linsenanordnung aufgefangene elektromagnetische Strahlung durchlässig ist, weist den weiteren Vorteil auf, dass sich das optische Modul optisch ansprechend in ein Fahrzeugdesign integrieren lässt.

Die Strahlungsbarriere kann dabei aus einem beliebigen Material bestehen, welches die von der Lichtquelle abgegebene elektromagnetische Strahlung blockiert. Die Strahlungsbarriere kann beispielsweise aus einem Kunststoff gefertigt sein, welche mit einem geeigneten Zusatzstoff, z.B. Ruß, zum Blockieren dieser elektromagnetischen Strahlung versehen ist. Prinzipiell wäre auch Metall ein geeignetes Material für die Strahlungsbarriere.

Die Strahlungsbarriere ist derart in die Abdeckung integriert, dass in die Abdeckung eingespeistes Licht nicht in Querrichtung in Richtung des Strahleneintrittsbereichs gelangen kann.

In einer bevorzugten Ausgestaltung ist deshalb auch vorgesehen, dass die Strahlungsbarriere umlaufend zu dem Strahleneintrittsbereich der Linsenanordnung angeordnet ist. Hierdurch ist sichergestellt, dass kein Streulicht über die Abdeckung in den Strahleneintrittsbereich gelangen kann.

Es ist weiterhin bevorzugt, wenn die Strahlungsbarriere derart ausgebildet ist, dass diese an einen Linsenhalter der Linsenanordnung angrenzt. Auch diese Ausgestaltung weist den oben erwähnten Vorteil auf, dass zuverlässig das Eindringen von Streulicht über die Abdeckung oder an dieser vorbei in den Strahleneintrittsbereich verhindert wird.

Eine weitere zweckmäßige Ausgestaltung sieht vor, dass die Strahlungsbarriere formschlüssig mit der Abdeckung verbunden ist. Hierdurch ergibt sich eine besonders einfache Montage des optischen Moduls, da ein Halbzeug aus Abdeckung und Strahlungsbarriere vorgefertigt werden kann, so dass nur noch das Halbzeug mit einem Gehäuse des optischen Moduls in geeigneter Weise zu verbinden ist. Besonders bevorzugt ist es hierbei, wenn die Strahlungsbarriere und die Abdeckung einstückig ausgebildet sind. Dies kann beispielsweise im Rahmen eines Zweikomponenten-Spritzgussverfahrens erfolgen. Das die Strahlungsbarriere ausbildende Material ist hierbei für die von der Lichtquelle abgegebene und die von der Linsenanordnung aufgenommene elektromagnetische Strahlung durchlässig. Hingegen ist das Material der Strahlungsbarriere für diese Wellenlängen undurchlässig. Durch dieses Herstellungsverfahren ist darüber hinaus gewährleistet, dass das Eindringen von Streulicht in die Abdeckung mit Sicherheit ausgeschlossen werden kann.

Zur Erlangung einer optisch gleichmäßigen Oberfläche der Abdeckung und damit des optischen Moduls ist die Strukturierung bevorzugt auf der zu der Lichtquelle bzw. der Linsenanordnung hingewandten Seite vorgesehen. Sofern es aus Funktionalitätsgründen notwendig ist, kann eine solche Strukturierung zusätzlich auf der Außenseite der Abdeckung vorgesehen sein. Denkbar wäre auch, ausschließlich auf der Außenseite der Abdeckung eine beschriebene Strukturierung vorzusehen, wobei die Strukturierung dann so ausgeführt ist, dass sie den optischen Strahlengang des Moduls nicht nachteilig beeinflusst.

Gemäß einer weiteren Ausgestaltung weist die Abdeckung auf ihrer von der Lichtquelle bzw. der Linsenanordnung abgewandten Seite eine ebene oder homogen glatte Oberfläche auf. Neben einer verbesserten Optik des optischen Moduls ergibt sich auch eine geringere Schmutzempfindlichkeit sowie eine bessere Reinigungsmöglichkeit.

Es ist weiterhin vorgesehen, dass die Lichtquelle durch eine oder mehrere Leuchtdioden oder Laserdioden gebildet ist, die die Linsenanordnung zumindest teilweise umgeben. Die Anordnung und die Wahl der Anzahl der Leuchtdioden erfolgt nach den für die Ausleuchtung gegebenen Erfordernissen. Die Leuchtdioden können ringförmig um die Linsenanordnung angeordnet sein, wobei dies jedoch nicht zwingend notwendig ist.

Es ist weiterhin vorgesehen, dass die Abdeckung mit einem Gehäuse des optischen Moduls formschlüssig verbunden ist. Diese Maßnahme stellt sicher, dass zwischen das Gehäuse und die Abdeckung kein Streulicht gelangen kann, welches dann bei einem Eintritt in den Strahleneintrittsbereich die optischen Eigenschaften verringern würde.

Dabei ist es bevorzugt, wenn die Abdeckung zusammen mit der an dieser angeordneten Strahlungsbarriere in das Gehäuse eingeschnappt wird. Hierdurch ergibt sich eine besonders einfache Montage. Es ist weiterhin sichergestellt, dass die Abdeckung mit der an dieser angeordneten Strahlungsbarriere auf einfache Weise ausgetauscht werden kann, um z.B. einer geänderten Umgebung Rechnung zu tragen.

Gemäß einer weiteren Ausgestaltung ist vorgesehen, dass die Abdeckung im Bereich der Linsenanordnung eine andere Gestalt, insbesondere einen anderen Querschnitt aufweist, als im Bereich der Lichtquelle. Die Abdeckung des optischen Moduls muss damit nicht über ihre gesamte Fläche homogen ausgebildet sein. Die Abdeckung kann vielmehr den Erfordernissen der Lichtquelle bzw. der Linsenanordnung, oder allgemein der Kamera, angepasst werden.

Die Erfindung wird nachfolgend anhand der Figuren näher erläutert. Es zeigen:
- Fig. 1: eine erste perspektivische Darstellung eines erfindungsgemäßen optischen Moduls,
- Fig. 2: einen Querschnitt durch das in Fig. 1 gezeigte optische Modul,
- Fig. 3: einen vergrößerten Ausschnitt des Querschnitts der Fig. 2,
- Fig. 4: eine perspektivische Darstellung einer in dem erfindungsgemäßen Modul eingesetzten Abdeckung, und
- Fig. 5: eine weitere perspektivische Darstellung der Abdeckung aus Fig. 4, wobei eine Schnittansicht dargestellt ist.

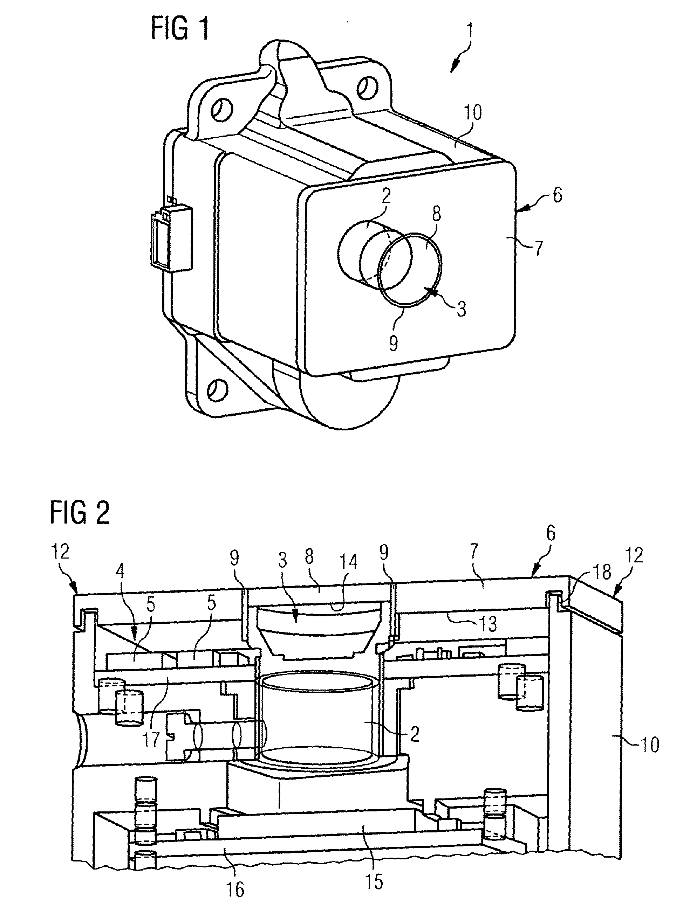

Figur 1 zeigt in einer perspektivischen Darstellung ein erfindungsgemäßes optisches Modul 1. Der genaue Aufbau des erfindungsgemäßen optischen Moduls 1 geht besser aus Fig. 2 hervor, die einen Schnitt durch das optische Modul 1 gemäß Fig. 1 darstellt.

Das optische Modul 1 weist in bekannter Weise eine Linsenanordnung 2 zum Projizieren von elektromagnetischer Strahlung auf ein Halbleiterelement 15 auf. Diese Einheit wird auch als Kamera bezeichnet. Die Linsenanordnung 2 ist in der Figur lediglich in schematischer Weise dargestellt. Die Linsenanordnung kann eine oder eine Mehrzahl an separaten Linsen aufweisen. Die Ausgestaltung und Anordnung der Linsen zueinander kann dabei entsprechend den Anforderungen gewählt werden. Das Halbleiterelement 15 ist auf einem Träger aufgebracht und liegt im optischen Strahlengang zu der Linsenanordnung.

Benachbart eines Strahleneintrittsbereichs 3 der Linsenanordnung 2 ist eine Lichtquelle 4 in Form einer oder mehrerer Leuchtdioden 5 (LEDs) auf einem weiteren Träger 17 angeordnet. Die Leuchtdioden 5 können dabei ringförmig um den Strahleneintrittsbereich 3 angeordnet sein. Dies ist jedoch nicht zwingend; die Anzahl und die Anordnung der Leuchtdioden kann auf prinzipiell beliebige Weise erfolgen, sofern sichergestellt ist, dass die zu beobachtende Umgebung gut ausgeleuchtet ist. Die Leuchtdioden 5 auf dem Träger 17 sind gegenüber dem Strahleneintrittsbereich 3 zurückgesetzt, so dass die von ihnen abgegebene elektromagnetische Strahlung, vorzugsweise in einem nicht sichtbaren Bereich des Lichts, nicht direkt in die Linsenanordnung leuchten kann.

Der Strahleneintrittsbereich 3 wird durch einen Linsenhalter 11 ausgebildet, der konzentrisch zum Strahlengang der Linsenanordnung 2 angeordnet ist. Der Linsenhalter 11 sorgt aufgrund seiner trichterförmigen Gestalt bereits dafür, dass von der Seite her gerichtete elektromagnetische Strahlung die Qualität des von dem Halbleiterelement aufgenommenen Bildes nicht negativ beeinflusst.

Vor die Linsenanordnung 2 und die Lichtquelle 4 ist eine für die von der Lichtquelle 4 abgegebene und die durch die Kamera aufzunehmende elektromagnetische Strahlung durchlässige Abdeckung 6 angeordnet. Die Abdeckung 6 umfasst einen Bereich 7, welcher die Lichtquelle bedeckt und einen Bereich 8, welcher die Linsenanordnung bedeckt. Die Bereiche 7, 8 können einteilig oder zweiteilig ausgeführt sein. Von der Außenseite her (vgl. Fig. 1) wird durch die Abdeckung 6 eine optisch homogene Fläche bereitgestellt, wodurch sich einerseits eine vorteilhafte Optik des optischen Moduls und andererseits eine geringe Anfälligkeit gegenüber Verschmutzung bzw. eine einfache Reinigungsmöglichkeit ergibt.

Die beiden Abschnitte 7, 8 der Abdeckung 6 sind durch eine Strahlungsbarriere 9 voneinander getrennt, so dass eine Lichtkopplung über die Bereiche 7, 8 der Abdeckung ausgeschlossen ist. Die Strahlungsbarriere 9 ist für das von der Lichtquelle 4 abgegebene Spektrum undurchlässig und sperrt mindestens dieses Frequenzspektrum sowie das Frequenzspektrum, in dem das Halbleiterelement empfindlich ist. Die Strahlungsbarriere 9 wird bevorzugt derart realisiert, dass die von der Außenseite her homogene Fläche optisch nicht beeinträchtigt wird. Die Strahlungsbarriere 9 ist derart ausgeführt, dass diese sowohl hinsichtlich ihrer Farbe als auch ihrer Form nicht oder nur schwer erkennbar ist.

Die Strahlungsbarriere 9 kann prinzipiell aus einem beliebigen Material hergestellt sein, sofern sichergestellt ist, dass dieses undurchlässig für elektromagnetische Strahlung im Arbeitsbereich der Lichtquelle ist. Bevorzugt kommen Materialien aus einem Kunststoff oder einem Metall in Betracht.

Die Strahlungsbarriere 9 kann als separates Bauteil von der Abdeckung 6 hergestellt sein und im Rahmen eines Herstellungsschrittes formschlüssig mit diesem verbindbar sein. Es ist jedoch auch denkbar, die Abdeckung 6 und die Strahlungsbarriere 9 als eine Einheit herzustellen, was sich beispielsweise im Rahmen eines Zweikomponenten-Spritzgussverfahrens realisieren lässt.

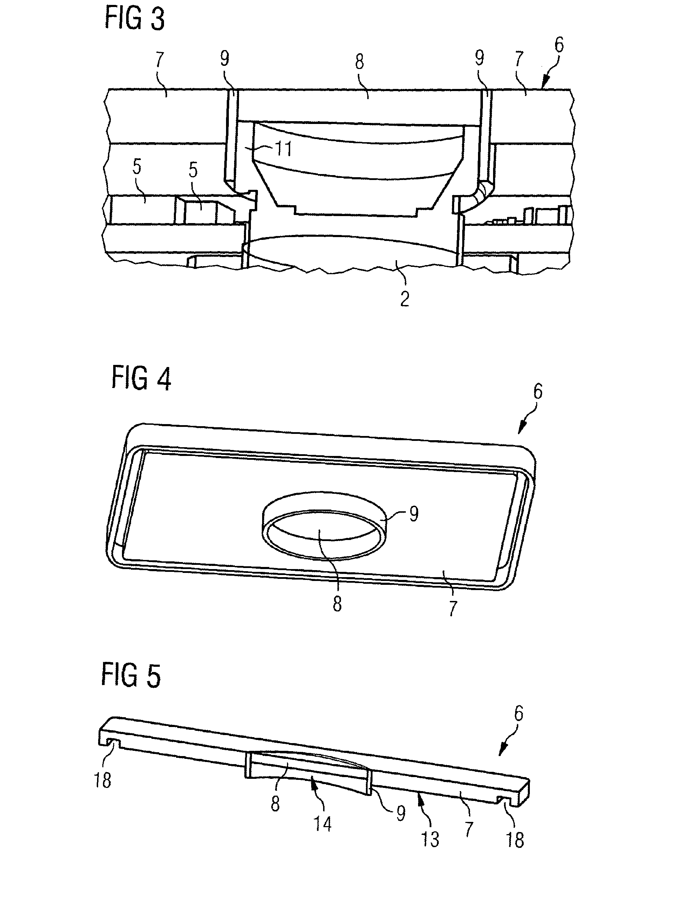

Das Halbzeug aus Abdeckung 6 und Strahlungsbarriere 9 ist hinsichtlich seiner geometrischen Abmaße derart bemessen, dass die Strahlungsbarriere 9 bis an den Linsenhalter 11 grenzt bzw. diesen, wie in Figuren 2 und 3 gezeigt, formschlüssig umschließt. Andererseits ist die Strahlungsbarriere 9 bis zur Außenseite der Abdeckung 6 durchgehend, wodurch die Einkopplung von Licht über die Abdeckung 6 in Richtung des Strahleneintrittsbereichs der Kamera praktisch ausgeschlossen ist.

Die Abdeckung 6 ist mit dem Gehäuse 10 in dem Ausführungsbeispiel über eine Verrastung 12 verbunden. Diese kann, wie dies in Fig. 2 dargestellt ist, durch eine in der Abdeckung 6 vorgesehene, umlaufende Nut 18 realisiert sein, in welcher ein entsprechend angepasster Abschnitt des Gehäuses 10 einpressbar ist.

Eine bessere Darstellung der auf das Gehäuse 10 des optischen Moduls aufgebrachten Abdeckung 6 ist in Fig. 4 dargestellt. Diese Figur zeigt die Abdeckung 6 in einer perspektivischen Darstellung von ihrer Rückseite 13, 14 her, d.h. der Seite, welche der Lichtquelle 4 und der Linsenanordnung 2 zugeordnet ist. Aus dieser Darstellung ist gut erkennbar, dass die Strahlungsbarriere 9 ringförmig ausgebildet ist und sich über die Rückseite 13, 14 der Abdeckung 6 hinaus erstreckt. Der Durchmesser der Strahlungsbarriere 9 ist dabei derart gewählt, dass dieser an den Außendurchmesser des Linsenhalters 11 angepasst ist und unter leichtem Druck auf diesen aufsetzbar ist (vgl. Fig. 3). Hierdurch ist sichergestellt, dass kein Streulicht zwischen der Strahlungsbarriere 9 und dem Linsenhalter 11 in Richtung des Strahleneintrittsbereichs 3 hindurchtreten kann.

Aus Fig. 5, welche einen Schnitt durch die Abdeckung 6 gemäß Fig. 4 in einer perspektivischen Darstellung zeigt, geht hervor, dass die Strahlungsbarriere sich über die gesamte Dicke der Abdeckung 6 erstreckt. Aus der Figur ist weiterhin ersichtlich, dass Abschnitt 8 der Abdeckung 6, welcher der Linsenanordnung 2 zugeordnet ist, einen anderen Querschnitt als der Abschnitt 7 der Abdeckung 6 aufweist. Die Abschnitte 7, 8 der Abdeckung 6 können dabei an die jeweiligen Erfordernisse der Kamera bzw. der Lichtquelle angepasst werden. Insbesondere ist es denkbar, den Abschnitt 7 der Abdeckung 6 abschnittsweise mit einer Strukturierung zu versehen, welche z.B. den Strahlenverlauf der von der Lichtquelle abgegebenen elektromagnetischen Strahlung in einen gewünschten Bereich lenkt. Ebenso kann die Strukturierung des Abschnitts 8 derart ausgebildet sein, dass dieser Abschnitt eine optische Funktion im Sinne einer Linse einnimmt.

Die Strukturierung wird bevorzugt lediglich auf der Rückseite 13, 14 der Abdeckung 6 vorgesehen, so dass die Optik, welche im wesentlichen durch Vorderseite der Abdeckung 6 bestimmt ist, für den Betrachter nicht beeinträchtigt ist.

Es ist bevorzugt, wenn das optische Modul derart betrieben wird, dass die Lichtquelle mit der Kamera synchronisiert ist, d.h. eine Beleuchtung der Umgebung findet lediglich dann statt, wenn durch die Kamera (genauer das Halbleiterelement) ein Bild aufgenommen wird. Hierdurch ist sichergestellt, dass durch die Lichtquelle kein Wärmeproblem entsteht, wie dies bei einer Dauerbeleuchtung der Fall wäre.

Mit der vorliegenden Erfindung ist ein optisches Modul für ein Fahrerassistenzsystem bereit gestellt, das sich auf unauffällige Weise in ein Fahrzeug integrieren lässt und eine gute Qualität der durch die Kamera aufgenommenen Bilder ermöglicht.

## Patentansprüche

1. Optisches Modul mit einer Linsenanordnung (2) zum Projizieren von elektromagnetischer Strahlung auf einen Bildaufnehmer (15) und mit einer in der Umgebung des Strahleneintrittsbereichs (3) der Linsenanordnung angeordneten Lichtquelle (4), wobei die Linsenanordnung (2) und die Lichtquelle mit einer für die elektromagnetische Strahlung durchlässigen Abdeckung (6) versehen sind, wobei die Abdeckung (6) mit einer Strahlungsbarriere (9) versehen ist, die für von der Lichtquelle (4) abgegebene Strahlung undurchlässig ist und eine direkte Einkopplung von von der Lichtquelle (4) abgegebenen Strahlung in die Linsenanordnung (2) verhindert und derart in die Abdeckung (6) integriert ist, dass in die Abdeckung (6) eingespeistes Licht nicht in Querrichtung in Richtung des Strahleneintrittsbereichs (3) gelangen kann,
**dadurch gekennzeichnet, dass**
der Bildaufnehmer (15) durch ein Halbleiterelement gebildet ist, und
die Abdeckung (6) zumindest auf ihrer zu der Lichtquelle (4) bzw. der Linsenanordnung (2) hin gewandten Seite eine Strukturierung aufweist, wobei die Strukturierung eine den Strahlenverlauf der elektromagnetischen Strahlung lenkende Form aufweist.

2. Optisches Modul nach Anspruch 1,
**dadurch gekennzeichnet, dass**
die Strahlungsbarriere (9) umlaufend zu dem Strahleneintrittsbereich (3) der Linsenanordnung (2) angeordnet ist.

3. Optisches Modul nach Anspruch 1 oder 2,
**dadurch gekennzeichnet, dass**
die Strahlungsbarriere (9) derart ausgebildet ist, dass diese an einen Linsenhalter (11) der Linsenanordnung (2) angrenzt.

4. Optisches Modul nach einem der vorhergehenden Ansprüche,
**dadurch gekennzeichnet, dass**
die Strahlungsbarriere (9) formschlüssig mit der Abdeckung (6) verbunden ist.

5. Optisches Modul nach einem der Ansprüche 1 bis 3,
**dadurch gekennzeichnet, dass**
die Strahlungsbarriere (9) und die Abdeckung (6) einstückig ausgebildet sind.

6. Optisches Modul nach einem der vorhergehenden Ansprüche,
**dadurch gekennzeichnet, dass**
die Abdeckung (6) auf ihrer von der Lichtquelle (4) bzw. der Linsenanordnung (2) abgewandten Seite eine ebene oder homogen glatte Oberfläche aufweist.

7. Optisches Modul nach einem der vorhergehenden Ansprüche,
**dadurch gekennzeichnet, dass**
die Lichtquelle (4) durch eine oder mehrere Leuchtdioden oder Laserdioden gebildet ist, die die Linsenanordnung (2) zumindest teilweise umgeben.

8. Optisches Modul nach einem der vorhergehenden Ansprüche,
**dadurch gekennzeichnet, dass**
die Abdeckung (6) mit einem Gehäuse (10) des optischen Moduls (1) formschlüssig verbunden ist.

9. Optisches Modul nach einem der vorhergehenden Ansprüche,
**dadurch gekennzeichnet, dass**
die Abdeckung (6) zusammen mit der an dieser angeordneten Strahlungsbarriere (9) in das Gehäuse (10) eingeschnappt wird.

10. Optisches Modul nach einem der vorhergehenden Ansprüche,
**dadurch gekennzeichnet, dass**
die Abdeckung (6) im Bereich der Linsenanordnung (2) eine andere Gestalt, insbesondere einen anderen Querschnitt aufweist als im Bereich der Lichtquelle (4).

## Claims

1. Optical module with a lens arrangement (2) for projecting electromagnetic radiation to an image sensor (15) and with a source of light (4) arranged within the surrounding area of the radiation inlet area (3) of the lens arrangement, with the lens arrangement (2) and the source of light being provided with a cover (6) which is permeable to electromagnetic radiation, with the cover (6) being provided with a radiation barrier (9), which is impermeable to radiation emitted by the source of light (4) and prevents a direct injection of radiation emitted by the source of light (4) into the lens arrangement (2), and is integrated into the cover (6) in such a manner that light injected into the cover (6) cannot reach the transverse direction toward the radiation inlet area (3),
**characterised in that**
the image sensor (15) is formed by a semiconductor element, and the cover (6) comprises a structuring at least on its side facing the source of light (4) and/or the lens arrangement, with the structuring comprising a form which guides the beam path of the electromagnetic radiation.

2. Optical module according to claim 1, **characterised in that** the radiation barrier (9) is arranged circumferentially to the radiation inlet area (3) of the lens arrangement (2).

3. Optical module according to claim 1 or 2, **characterised in that** the radiation barrier (9) is embodied in such a manner that it borders a lens holder (11) of the lens arrangement (2).

4. Optical module according to one of the preceding claims, **characterised in that** the radiation barrier (9) is connected to the cover (6) in a form-fit fashion.

5. Optical module according to one of claims 1 to 3, **characterised in that** the radiation barrier (9) and the cover (6) are embodied in one piece.

6. Optical module according to one of the preceding claims, **characterised in that** the cover (6) features an even or homogonously flat surface on its side facing away from the source of light (4) and/or the lens arrangement.

7. Optical module according to one of the preceding claims, **characterised in that** the source of light (4) is formed by one or more light emitting diodes or laser diodes, which at least partly surround the lens arrangement (2).

8. Optical module according to one of the preceding claims, **characterised in that** the cover (6) is connected to a housing (10) of the optical module (1) in a form-fit fashion.

9. Optical module according to one of the preceding claims, **characterised in that** the cover (6) together with the radiation barrier (9) arranged thereupon is snapped into the housing (10).

10. Optical module according to one of the preceding claims, **characterised in that** in the region of the lens arrangement (2), the cover (6) features another design, in particular another cross section, to that within the region of the source of light (4).

## Revendications

1. Module optique comprenant un jeu de lentilles (2) destiné à projeter du rayonnement électromagnétique sur un capteur d'images (15) et une source de lumière (4) disposée aux environs de la zone d'entrée de rayonnement (3) du jeu de lentilles, le jeu de lentilles (2) et la source de lumière étant munis d'un recouvrement (6) perméable au rayonnement électromagnétique, ce recouvrement (6) étant muni d'une barrière de rayonnement (9) qui est imperméable vis-à-vis du rayonnement issu de la source de lumière (4) et qui empêche une entrée directe du rayonnement issu de la source de lumière dans le jeu de lentilles (2), cette barrière de rayonnement étant intégrée dans le recouvrement (6) de telle manière que de la lumière envoyée dans le recouvrement (6) ne puisse s'orienter transversalement en direction de la zone d'entrée de rayonnement (3),
**caractérisé en ce que** le capteur d'images (15) est constitué par un composant semi-conducteur et
**en ce qu'**au moins sur sa face tournée vers la source de lumière (4) ou vers le jeu de lentilles (2), le recouvrement (6) présente une structure ayant une forme apte à dévier le trajet de rayonnement du rayonnement électromagnétique.

2. Module optique selon la revendication 1, **caractérisé en ce que** la barrière de rayonnement (9) est disposée autour de la zone d'entrée du rayonnement (3) du jeu de lentilles (2).

3. Module optique selon la revendication 1 ou la revendication 2, **caractérisé en ce que** la barrière de rayonnement (9) est conformée de telle manière qu'elle avoisine une monture de lentilles (11) du jeu de lentilles (2).

4. Module optique selon l'une des revendications précédentes, **caractérisé en ce que** la barrière de rayonnement (9) est solidaire du recouvrement (6) par conjugaison de formes.

5. Module optique selon l'une des revendications 1 à 3, **caractérisé en ce que** la barrière de rayonnement (9) et le recouvrement (6) sont faits d'une seule pièce.

6. Module optique selon l'une des revendications précédentes, **caractérisé en ce que** le recouvrement (6) présente une surface plane ou uniformément lisse sur sa face opposée par rapport à la source de lumière (4) ou au jeu de lentilles (2).

7. Module optique selon l'une des revendications précédentes, **caractérisé en ce que** la source de lumière (4) est formée d'une ou de plusieurs diodes lumineuses ou de diodes laser qui entourent au moins partiellement le jeu de lentilles (2).

8. Module optique selon l'une des revendications précédentes, **caractérisé en ce que** le recouvrement (6) est solidaire par conjugaison de formes d'un boîtier (10) du module optique (1).

9. Module optique selon l'une des revendications précédentes, **caractérisé en ce que** le recouvrement (6) et la barrière de rayonnement (9) qui est disposée sur celui-ci, sont encliquetés sur le boîtier (10).

10. Module optique selon l'une des revendications précédentes, **caractérisé en ce que** dans la zone du jeu de lentilles (2), le recouvrement (6) présente une forme, en particulier une section, différente de celle qu'il a dans la zone de la source de lumière (4).
